# EUROPÄISCHE PATENTANMELDUNG

(11) **EP 1 935 604 A2**
(43) Veröffentlichungstag der Anmeldung: **25.06.2008**
(21) Anmeldenummer: 07033552.6
(22) Anmeldetag: 15.11.2007
(51) Int. Cl.: B29C 44/12, B60R 16/02

(54) **Verfahren zur Herstellung einer Kunststoffhaut mit Folienschaltung**

(30) Priorität: 23.12.2006 DE 102006061388
(71) Anmelder: Benecke-Kaliko AG, 30419 Hannover (DE)
(72) Erfinder: Decher, Heribert, 30890 Barsinghausen (DE); Iben, Dirk, Dr., 23611 Sereetz (DE); Parzelski, Zbigniew, 38124 Braunschweig (DE); Dalibor, Harald, 30826 Garbsen (DE); Borowski, Gregor, 38126 Braunschweig (DE)
(74) Vertreter: Finger, Karsten

(57) **Zusammenfassung**

Verfahren zur Herstellung einer Kunststoffhaut (1) mit eingebetteten Folien oder flächigen Trägern (9) mit Leiterbahnen, elektronischen Schaltungen oder Schaltelementen (10) durch Rotationssintern wobei die Folien oder Träger (9) mit einer polymeren Schicht (12) bedeckt sind, welche eine Reaktion zwischen Kunststoffhaut (1) und Leiterbahnen (10) verhindert und die Folien oder Träger (9) auf die noch nicht vollständig ausgehärtete und abgekühlte Formhaut aufgebracht und mit der Formhaut vor Aufbringen der Hinterschäumung durch Kleben oder Anschmelzen verbunden werden.

## Beschreibung

Die Erfindung betrifft ein Verfahren zur Herstellung einer ein- oder mehrschichtige Kunststoffhaut als Oberflächenbelag von beschichteten Gegenständen, insbesondere einer Kunststoffhaut für ein beschichtetes Verkleidungsteil für den Innenraum eines Kraftfahrzeuges, wobei in der Kunststoffhaut Schalt-, Sensor- oder Signalübertragungselemente in Form von mit Leiterbahnen, elektronischen Schaltungen oder Schaltelementen versehenen Folien oder flächigen Trägern eingebettet und mindestens teilweise von der Kunststoffhaut überzogen sind.

Genarbte, gemusterte, oder fein strukturiert Kunststoffhäute sind als Oberflächen für Gegenstände weithin bekannt und werden z. B. verwendet für die Innenverkleidung in Fahrzeugen, hier oft als relativ weiche unterschäumte Folien mit angenehmer Haptik etwa für die Verkleidung von Armaturenbrettern oder die Innenschalen von Türen etc. In entsprechender Anpassung von Festigkeit und Design werden solche Folien natürlich auch für andere hochwertig beschichtete Waren genutzt.

Im Stand der Technik sind zur Herstellung der obersten Folien solcher Kunststoffhäute verschiedene Verfahren bekannt, zum Beispiel Walz- und/oder Prägeverfahren zur Herstellung von "endlosen" Folienbahnen aus thermoplastischem Kunststoff, so genannte Kompaktfolien, oder Verfahren zur Herstellung von werkzeugfallenden einzelnen Formhäuten, also von Kunststoff-Formteilen.

Bei den Walz- und Prägeverfahren wird eine als Bahnenware vorliegende thermoplastische Folie mit Hilfe einer Prägewalze mit einer dreidimensional strukturierten, geprägten Oberfläche, also etwa einer genarbten "Lederoberfläche" versehen.

Als werkzeugfallende Formhäute sind hier mehr oder weniger steife Kunststoff-Formteile bezeichnet, die beispielsweise durch verschiedenen Sinter- oder Sprühverfahren in Formwerkzeugen hergestellt werden, bei denen ein oder mehrere flüssige oder pulverförmige Komponenten in eine Form gegeben werden und dort ausreagieren / aushärten. Werkzeugfallende Formhäute entstehen somit auch durch Rotationssintern, beispielsweise durch Verfahren zur Herstellung so genannter Slush-Häute.

Bei diesen werkzeugfallenden Verfahren ergibt sich zudem die Möglichkeit, die Oberflächenstruktur / -textur, d.h. die Oberfläche der Formhaut , also etwa das Erscheinungsbild einer Narbe, und die Geometrie des gesamten Bauteiles in einem einzigen Formprozess während der Herstellung festzulegen. Dazu wird zum Beispiel die Narbstruktur und Bauteilgeometrie als Negativ in eine Werkzeugform gebracht, die Formhaut durch Sinter- oder Sprühverfahren ausgeformt und danach entnommen.

Sowohl die Kompaktfolien als auch die Formhäute werden in der Regel rückseitig mit einer Schicht aus Kunststoffschaum versehen, entweder nach dem Prägen und/oder nach Einbringen / Tiefziehen in die Bauteilform (Bahnenware) oder bereits in der Werkzeugform, in der die Formhaut hergestellt wurde. Natürlich sind weitere Verfahren, wie etwa Streichverfahren, zur Schaumbeschichtung bekannt. Durch dieses anschließende "Hinterschäumen" erhält man ein bereits recht steifes dreidimensional ausgeformtes Bauteil. Das Hinterschäumen stellt hierbei nur eine Möglichkeit dar, für die Kunststoffhaut eine stabilisierende Grundstruktur zu bilden. Gleichermaßen ist etwa das Aufkleben von bereits fertig gestellten Strukturelementen aus Kunststoffen bekannt.

Zur Klarstellung soll in diesem Zusammenhang der Begriff "Kunststoffhaut" definiert werden als Kunststoffüberzug, der auf einer formstabilen Trägerstruktur aus hartem Kunststoff oder anderen Materialien aufgebracht ist und ggf. aus mehreren miteinander verbundenen Schichten besteht, nämlich üblicherweise und wie oben dargestellt aus mindestens der außen liegenden Oberflächenschicht (Kompaktfolie oder Formhaut), die auf ihrer Außenseite oft eine Strukturierung oder Narbung aufweist und einer darunter liegenden geschäumten Schicht, die eine gewisse weiche und angenehmen Griffigkeit bzw. Haptik erzeugt.

Üblicherweise werden die oben genannten Formhäute mit ihren Verstärkungen oder Hinterschäumungen nach dem Herstellungsprozess noch einmal sauber bearbeitet, d.h. evtl. vorhandene Hautränder werden abgeschnitten und - bei Formhäuten für Armaturenbretter - die nötige Ausnehmungen oder Löcher für Instrumente, Schalter, Zierleisten, Radio etc. hergestellt. Anschließend wird eine solche Formhaut mit ihrer Schaumschicht / Verstärkungsschicht auf eine formstabile Trägerstruktur aus hartem Kunststoff oder anderen Materialien aufgebracht, welche im Wesentlichen bereits das Inneneinrichtungs-Bauteil des Fahrzeuges bereitstellt, also beispielsweise auf einen Armaturenbrett-Träger / Instrumententafelträger aus Hart-Kunststoff oder auf eine vorgeformte Tür-Innenverkleidung aus verleimtem und verpresstem Fasermaterial.

Danach werden alle Schalter und Signalelemente einzeln in das Armaturenbrett oder in die Türverkleidung eingebaut und verdrahtet bzw. mit Anschlußleitungen versehen, die dann beim Einbau ins Fahrzeug an die Fahrzeugelektrik / -elektronik angeschlossen werden können. Gleiches gilt für den Einbau von Instrumenten, Leuchtmitteln, Lautsprechern etc. Zierleisten und Halterungen müssen ebenfalls noch angebracht werden.

Insgesamt sind also noch ein erheblicher Aufwand, eine Reihe von zeit- und kostenintensiven Fertigungsschritten und eine logistische Planung erforderlich bis zur Übergabe eines einbaufertigen Armaturenbrettes, eines Türeinsatzes oder ähnlicher Bauteile mit Funktionselementen an den weiterverarbeitenden Betrieb, hier nämlich an den Fahrzeughersteller.

Eine bereits fortgeschrittenere Lösung wird in der DE 102 006 008 385.7 offenbart. Dort sind in der Kunststoffhaut Bereiche angeordnet, in denen die Kunststoffhaut eine Schalt-, Sensor- oder Signalübertragungsfunktion aufweist. Durch solche funktionalen Elemente in der Kunststoffhaut entfällt der nachträgliche Einbau derselben in Form von separaten Schaltern, Sensoren, die wiederum als Einzelelemente sicher mit der Kunststoffhaut verbunden und mit einer Vielzahl von Anschlusskabeln versehen werden müssten. Die Verbindung diese funktionalen Elemente mit der Kunststoffhaut und die dauerhafte Funktionsfähigkeit derselben sind jedoch recht schwierig zu realisieren.

Die US 6,483,048 B1 offenbart ein Innenverkleidungsteil für ein Fahrzeug mit einer Trägerstruktur und einer außen angeordneten Haut, wobei zwischen Haut und Trägerstruktur eine Schaumschicht aufgebracht wird. Das Innenverkleidungsteil weist Schalteranordnungen auf, die innerhalb der Schaumschicht bzw. zwischen Haut und Träger angeordnet sind. Die zu dieser Schalteranordnung gehörenden Zuleitungen sind dabei zwischen polymeren Schichten eingebettet, um einen Kurzschluss oder einen elektrischen Kontakt zu vermeiden. Ebenfalls offenbart ist ein Verfahren zur Herstellung eines solchen Innenverkleidungsteils, welches jedoch neben der Beschreibung der Anordnung der einzelnen Schichten lediglich im Hinblick auf den Pressungsdruck bei der Herstellung des Schaumes spezifiziert ist.

Die DE 38 41 420 A1 offenbart ein Verfahren zur Herstellung eines Formlings aus Schaumstoff, beispielsweise eines Armaturenbrettes in einem Motorfahrzeug. Der aus unterschiedlichen Schaumschichten bestehende Formling weist eine zwischen zwei Schichten liegende gedruckte Schaltung auf, die aus Leitern besteht, die beidseitig mit einem Kunststofffirn versehen sind. Die in der gedruckten Schaltung vorhandenen Leiter ragen dabei in eine Ausnehmung bzw. ein Loch der einen Schaumschicht hinein, in welches ein Koppelelement eingebracht wird, welches danach mit einem Funktionselement unter Verbindung der Schaumschichten verpresst wird. Das hier beschriebene Herstellverfahren, welches die Gesamtstruktur des Formlings betrifft, offenbart aber nicht die spezifischen Herstellungsmerkmale einer Folie.

Die US 2004/0080459 A1 betrifft eine in eine Folie für ein Innenverkleidungsteil eines Fahrzeuges integrierte Antenne, bei dem die die Antenne bildendenden Leiter oder konduktiven Elemente mit Hilfe einer flexiblen Folie getrennt sind und in einer Haut- bzw. Schaumschicht eingebettet sind, offenbart jedoch keine besonderen Merkmale zur Herstellung der Kunststoffhaut als solche.

Die US 6,353,415 B1 offenbart ein Verfahren zur Herstellung einer Antenneneinrichtung, die in ein Innenverkleidungsbauteil eines Fahrzeuges eingeschmolzen wird. Der Anspruch ist hier auf das Einschmelzen als solches, die verschiedenen Kunststoffmaterialien des Verkleidungsteils und die Materialien der Antenne sowie schließlich die genaue Anordnung der Antenne innerhalb des Bauteils gerichtet. Nicht offenbart ist ein Verfahren zur Herstellung der Kunststoffschicht als solcher.

Für die Erfindung bestand daher die Aufgabe, eine Herstellverfahren bereitzustellen, mit dem eine Kunststoffhaut mit einer sicheren Verbindung zwischen letzterer und integrierten Schalt-, Sensor- oder Signalübertragungselementen in Form von Folien oder Trägern geschaffen eine Schädigung dieser empfindlichen funktionalen Element sicher vermeiden wird, welches zudem zu einer hohen Bauteilintegration mit einem gefälligen Erscheinungsbild und eine lange Lebensdauer der mit den Schalt-, Sensor- oder Signalübertragungselementen verbundenen Kunststoffhaut führt und einfach in ein übliches Herstellverfahren eingebunden werden kann.

Gelöst wird diese Aufgabe durch die Merkmale des Hauptanspruchs. Weitere vorteilhafte Ausbildungen sind in den Unteransprüchen enthalten.

Dabei weisen die Folien oder flächigen Träger auf ihren der Kunststoffhaut zugewandten Oberflächen mindestens eine die Leiterbahnen, elektronischen Schaltungen oder Schaltelemente bedeckende polymere Schicht auf, welche eine Reaktion zwischen Kunststoffhaut und Leiterbahnen, elektronischen Schaltungen oder Schaltelementen, also beispielsweise eine die Funktion letzterer negative beeinflussende Reaktion verhindert. Eine Vorschädigung der Leiterbahnen, elektronischen Schaltungen oder Schaltelemente etwa durch eine mechanische, korrosive, chemische, elektrochemische oder elektrophysikalische Reaktion zwischen solchen funktionalen Elementen und der Kunststoffhaut wird damit ebenso verhindert wie eine Überbeanspruchung durch Reaktionstemperaturen bei der Herstellung. Die polymere Schicht dient also dabei als Schutzschicht für die empfindlichen Schaltungselemente und stellt gleichzeitig die erforderliche Haftung oder Verbindung zu der Kunststoffhaut oder deren Schichten dar.

Das erfindungsgemäße Verfahren zur Herstellung einer solchen Kunststoffhaut mit einer werkzeugfallenden Formhaut besteht nun darin , dass ein oder mehrere pulverförmige Kunststoffkomponenten in eine Reaktionsform gegeben werden und dort durch ein Rotationssinterverfahren aufgeschmolzen werden. Natürlich eignen sich auch andere Sinterverfahren. Die mit einer die Leiterbahnen, elektronischen Schaltungen oder Schaltelemente bedeckenden polymeren Schicht versehenen Folien oder flächigen Träger werden dann auf die noch nicht vollständig ausgehärtete und abgekühlte Formhaut aufgebracht und mit der Formhaut vor Aufbringen der Hinterschäumung durch Kleben und Anschmelzen verbunden. Dies wird besonders dadurch erleichtert, dass die Formhaut selbst noch unter erhöhter Temperatur und damit sehr reaktiv vorliegt. Die Temperatur liegt hierbei etwa bei 100 bis 200° C.

Eine Vorschädigung der Leiterbahnen, elektronischen Schaltungen oder Schaltelemente etwa durch eine mechanische, korrosive, chemische, elektrochemische oder elektrophysikalische Reaktion zwischen solchen funktionalen Elementen und der Kunststoffhaut wird damit ebenso verhindert wie eine Überbeanspruchung durch Reaktionstemperaturen bei der Herstellung. Die polymere Schicht dient also dabei als Schutzschicht für die empfindlichen Schaltungselemente und stellt gleichzeitig die erforderliche Haftung oder Verbindung zu der Kunststoffhaut oder deren Schichten dar.

Eine vorteilhafte Ausbildung besteht darin, dass die die Leiterbahnen, elektronischen Schaltungen oder Schaltelemente bedeckende polymere Schicht eine Halogenisierungsreaktion zwischen Kunststoffhaut oder deren Bestandteilen und Leiterbahnen, elektronischen Schaltungen, Schaltelemente und oder Folie oder Träger verhindert. Bei den üblicherweise für Kraftfahrzeug-Innenteile verwendeten Kunststoffhäuten aus Polyvinylchlorid (PVC) wird so verhindert, dass bei Halogenisierungsreaktionen freiwerdende Chlormoleküle die Leiterbahnen schädigen, die etwa mit Hilfe eines Ätzverfahrens auf die in der Regel aus einem Polymer bestehende Folie /Träge aufgebracht oder aus einem Kupferdampf auf eine Folie aufgedampft wurden.

Je nach verwendeter Kunststoffhaut bzw. deren Bestandteilen oder Schichten muss natürlich die polymere Schicht, d.h. die Schutzschicht, so ausgebildet sein dass auch Halogenisierungsreaktionen mit Fluor, Jod oder Brom verhindert werden, oder dass die Materialien der Leiterbahnen, elektronischen Schaltungen, Schaltelemente etc. gegenüber Aminen oder weiteren niedermolekularen Bestandteilen, metallorganischen Verbindungen oder ähnlichem aus den umgebenden Materialien geschützt werden.

Eine weitere vorteilhafte Ausbildung besteht darin, dass die die Leiterbahnen, elektronischen Schaltungen oder Schaltelemente bedeckende polymere Schicht aus Polyurethan (PU) oder auch aus Polyester besteht. Beide Materialien weisen einen ausreichenden Chlor-Diffusions-Widerstand auch bei hohen Temperaturen auf.

Eine weitere vorteilhafte Ausbildung besteht darin, dass die die Leiterbahnen, elektronischen Schaltungen oder Schaltelemente bedeckende polymere Schicht mindestens teilweise mit einer Primer- oder Kleberschicht versehen ist, die mindestens mit Teilen bzw. einzelnen Schichten der Kunststoffhaut eine Verbindung eingeht. Hierdurch entsteht eine sichere Verbindung, etwa durch Klebung oder adhesive Reaktion, zwischen Kunststoffhaut und polymerer Schicht / Schutzschicht und damit eine sichere Einbindung der Folie / des Trägers für die Leiterbahnen und Schaltelemente in der Kunststoffhaut.

Eine weitere vorteilhafte Ausbildung besteht darin, dass die die Leiterbahnen, elektronischen Schaltungen oder Schaltelemente bedeckende polymere Schicht und die ggf. vorhandene Primerschicht mindestens teilweise für elektromagnetische Strahlung und/oder Wärme- bzw. Infrarotstrahlung durchlässig ausgebildet sind. Dadurch lassen sich z.B. auch signalgebende Strahlungselemente, wie etwa Leuchtdioden innerhalb der Schaltungselemente anordnen, die beim Einschalten durch die Kunststoffhaut leuchten. Ebenso können elektromagnetische Strahlungen von außen durchgelassen werden, etwa ein Transpondersignal eines Identifizierungs-Chips.

Ein weiteres geeignetes Verfahren zur Herstellung einer solchen Kunststoffhaut, bei dem die Kunststoffhaut als gewalzte und/oder geprägte thermoplastische Endlosfolie (Kompaktfolie) ausgebildet ist, besteht darin, dass die mit einer die Leiterbahnen, elektronischen Schaltungen oder Schaltelemente bedeckenden polymeren Schicht versehenen Folien oder flächigen Träger rückseitig auf die Endlosfolie bzw. Kompaktfolie aufgebracht und mit der Kompaktfolie vor Aufbringen der Hinterschäumung verklebt werden. Damit lassen sich auf einfache Weise große Mengen an erfindungsgemäßen Kunststoffhäuten herstellen.

Besonders geeignet ist eine solche Kunststoffhaut zur Verwendung als Verkleidungsteil für den Innenraum eines Fahrzeuges, vorzugsweise Armaturenbrett mit seinen diversen Schalt-und Bedienelementen, oder als Tür-Innenverkleidung, bei der die Schaltelemente für die Fensterheber und den Außenspiegel in der Kunststoffhaut integriert sind, oder für Sitz- und Lehnenverkleidungen in Flugzeugen, bei denen Schaltelemente für Licht, Belüftung und Serviceruf integriert sind, usw.

Anhand eines Ausführungsbeispieles soll die erfindungsgemäß hergestellte Kunststoffhaut näher erläutert werden. Es zeigen
- Fig. 1: Einen Formhaut aus Kunststoff für eine Armaturenbrett, werkzeugfallend hergestellt
- Fig. 2: Den Aufbau einer Kunststoffhaut mit einer äußeren Formhaut gemäß Fig. 1 im Schnitt

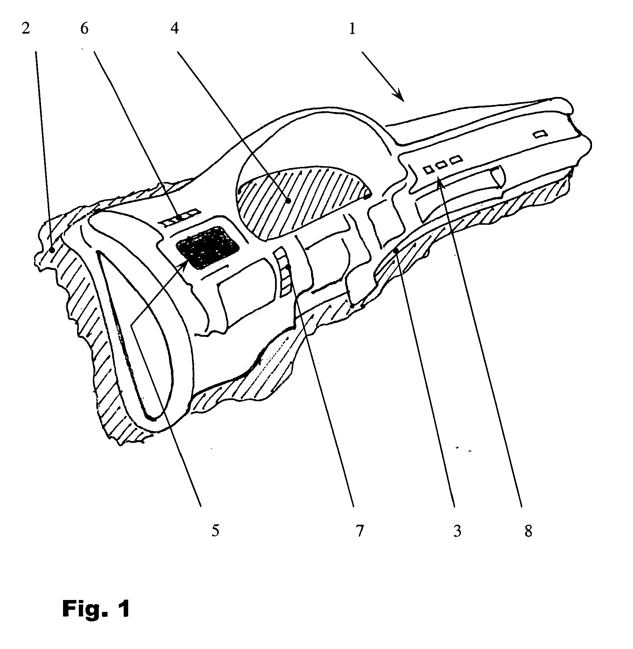

Die Fig. 1 zeigt hierzu eine im Rotations-Sinter-Verfahren hergestellte Formhaut 1 aus PVC, nämlich eine so genannte Slush-Haut für ein Armaturenbrett eines PKW, wie sie aus einer Schmelz- oder Reaktionsform, d.h. aus einer Werkzeugform entnommen wird. Die Kontur des Armaturenbrettes ist dabei bereits deutlich ausgeprägt, so dass die Formhaut 1 nach einer nachfolgenden Hinterschäumung auf eine entsprechend ausgebildete versteifende Unterkonstruktion, einen so genannten Instrumententafelträger (Armaturenbrett-Träger) aufgebracht werden kann.

Bei den schraffierten Bereiche 2, 3 der Formhaut handelt es sich um überschüssige Formränder, die in der Nachbearbeitung entfernt werden. Der schraffierte Bereich 4 wird ebenfalls in der Nachbearbeitung ausgeschnitten und bildet dann die Ausnehmung für die später einzusetzenden Anzeigeinstrumente.

In den äußeren Oberflächenbereichen der Formhaut befinden sich Aussparungen und/oder Markierungen 5, 6, 7 für die nach dem Aufbringen der Formhaut auf dem Armaturenbrett-Träger einzubauenden bzw. anzuschließenden Geräte und Instrument, nämlich für einen Lautsprecher (Aussparung 5), eine Schalterleiste (Markierung 6) und Kontrollleuchten (Markierung 7). Eine Schalterleiste 8 ist bereits vorhanden und besteht aus einem mit der Kunststoffhaut verbundenen so genannte Folien-Schalter, der auf die bei Berührung erfolgende Veränderung eines elektrischen Feldes reagiert. Die Anschlüsse an den Folienschalter 8 sind - wenn auch hier nicht näher dargestellt - als Folienbahnen bereits bis auf die Rückseite der Formhaut geführt und können beim Einbau des Armaturenbrettes direkt mit der Bordelektrik des Kraftfahrzeuges verbunden werden.

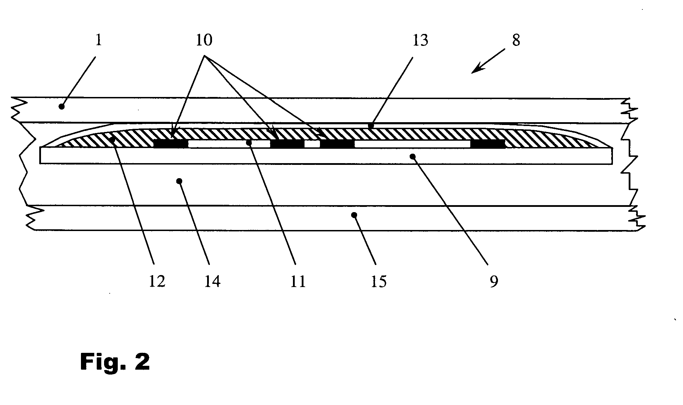

Fig. 2 zeigt prinzipiell den Aufbau einer Kunststoffhaut 8 mit einem solchen solchen Folienschalters im Schnitt. Man erkennt hier die Folie bzw. den flächigen Träger 9, die auf ihrer der Formhaut 1 zugewandten Oberfläche eine u. a. aus den Leiterbahnen 10 bestehende elektronische Schaltungen 11 aufweist. Die Leiterbahnen 10 sowie die gesamte elektronische Schaltungen 11 ist durch eine polymere Schicht, nämlich durch eine Polyurethanschicht 12 bedeckt, die eine Halogenisierungsreaktion zwischen den aufgeätzten Leiterbahnen 10 aus Kupfer und der aus PVC bestehenden Formhaut 1 sowie der darunter liegenden Schaumschicht 14 verhindert.

Über der Polyurethanschicht 12 ist eine Primerschicht 13 angeordnet, mit deren Hilfe die Polyurethanschicht 12 und damit die die Leiterbahnen 10 und die elektronische Schaltung 11 tragende Folie 9 mit der Formhaut 1 und mit der Schaumschicht 14 verklebt ist.

Der gesamte Verbund der Kunststoffhaut 8 ist auf einem aus Hartkunststoff bestehenden Instrumententafelträger 15 aufgeklebt.

### Bezugszeichenliste

### (Teil der Beschreibung)

- 1: Formhaut (PVC)
- 2: Überschüssiger Formrand
- 3: Überschüssiger Formrand
- 4: Ausnehmung
- 5: Ausnehmung
- 6: Markierung
- 7: Ausnehmung
- 8: Folienschalter
- 9: Flächiger Träger
- 10: Leiterbahn
- 11: Elektronische Schaltung
- 12: Polyurethanschicht
- 13: Primerschicht
- 14: Schaumschicht
- 15: Instrumententafelträger

## Patentansprüche

1. Verfahren zur Herstellung einer ein- oder mehrschichtige Kunststoffhaut als Oberflächenbelag von beschichteten Gegenständen als werkzeugfallende Formhaut, wobei in der Kunststoffhaut Schalt-, Sensor- oder Signalübertragungselemente in Form von mit Leiterbahnen, elektronischen Schaltungen oder Schaltelementen versehenen Folien oder flächigen Trägern eingebettet und mindestens teilweise von der Kunststoffhaut überzogen sind, und die Folien oder flächigen Träger auf ihren der Kunststoffhaut zugewandten Oberflächen mindestens eine die Leiterbahnen, elektronischen Schaltungen oder Schaltelemente bedeckende polymere Schicht aufweisen, welche eine Reaktion zwischen Kunststoffhaut und Leiterbahnen, elektronischen Schaltungen oder Schaltelemente verhindert, wobei zur Herstellung ein oder mehrere pulverförmige Kunststoffkomponenten in eine Reaktionsform gegeben werden und dort in einem Rotationssinterverfahren aufgeschmolzen werden, **dadurch gekennzeichnet, dass** die mit einer die Leiterbahnen, elektronischen Schaltungen oder Schaltelemente bedeckenden polymeren Schicht versehenen Folien oder flächigen Träger auf die noch nicht vollständig ausgehärtete und abgekühlte Formhaut aufgebracht und mit der Formhaut vor Aufbringen der Hinterschäumung durch Kleben oder Anschmelzen verbunden werden.

2. Verfahren zur Herstellung einer ein- oder mehrschichtige Kunststoffhaut nach Anspruch 1, **dadurch gekennzeichnet, dass** zur Abdeckung der Leiterbahnen, elektronischen Schaltungen oder Schaltelemente eine polymere Schicht aufgebracht wird, die eine Halogenisierungsreaktion zwischen Kunststoffhaut und Leiterbahnen, elektronischen Schaltungen, Schaltelemente und oder Folie oder Träger verhindert.

3. Verfahren nach Anspruch 1 oder 2, **dadurch gekennzeichnet, dass** die zur Abdeckung aufgebrachte polymere Schicht aus Polyurethan besteht.

4. Verfahren nach Anspruch 1 oder 2, **dadurch gekennzeichnet, dass** die zur Abdeckung aufgebrachte polymere Schicht aus Polyester besteht.

5. Verfahren nach Anspruch 1 bis 4, **dadurch gekennzeichnet, dass** die die Leiterbahnen, elektronischen Schaltungen oder Schaltelemente bedeckende polymere Schicht mindestens teilweise mit einer Primer- oder Kleberschicht versehen wird, die mindestens mit Teilen bzw. einzelnen Schichten der Kunststoffhaut eine Verbindung eingeht.

6. Verfahren nach Anspruch 1 bis 5, **dadurch gekennzeichnet, dass** die die Leiterbahnen, elektronischen Schaltungen oder Schaltelemente bedeckende polymere Schicht und die ggf. vorhandene Primerschicht mindestens teilweise für elektromagnetische Strahlung und/oder Wärme- bzw. Infrarotstrahlung durchlässig ausgebildet ist.

7. Verfahren zur Herstellung einer Kunststoffhaut nach Anspruch 1 bis 6 mit einer gewalzten und/oder geprägten thermoplastische Endlosfolie, **dadurch gekennzeichnet, dass** die mit einer die Leiterbahnen, elektronischen Schaltungen oder Schaltelemente bedeckenden polymeren Schicht versehenen Folien oder flächigen Träger rückseitig auf die Endlosfolie aufgebracht und mit der Endlosfolie vor Aufbringen der Hinterschäumung durch Kleben oder Anschmelzen verbunden werden.
